(19) Europäisches Patentamt / European Patent Office / Office européen des brevets

(11) **EP 3 979 264 A1**

(12) **EUROPEAN PATENT APPLICATION**
published in accordance with Art. 153(4) EPC

(43) Date of publication:
**06.04.2022 Bulletin 2022/14**

(21) Application number: **20815589.5**

(22) Date of filing: **29.05.2020**

(51) International Patent Classification (IPC):
**H01B 12/02** (2006.01)    **H01F 6/06** (2006.01)

(52) Cooperative Patent Classification (CPC):
**H01B 12/02; H01F 6/06;** Y02E 40/60

(86) International application number:
**PCT/JP2020/021496**

(87) International publication number:
**WO 2020/241893 (03.12.2020 Gazette 2020/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2019 JP 2019103286**

(71) Applicant: **Furukawa Electric Co., Ltd.**
**Tokyo 100-8322 (JP)**

(72) Inventors:
• **FUKUSHIMA Hiroyuki**
**Tokyo 100-8322 (JP)**

• **KIM Yonghoon**
**Tokyo 100-8322 (JP)**
• **Il Hideki**
**Tokyo 100-8322 (JP)**
• **SATO Takumi**
**Tokyo 100-8322 (JP)**
• **TSUBOUCHI Hirokazu**
**Tokyo 100-8322 (JP)**
• **SUGIMOTO Masahiro**
**Tokyo 100-8322 (JP)**

(74) Representative: **Winter, Brandl - Partnerschaft mbB**
**Alois-Steinecker-Straße 22**
**85354 Freising (DE)**

(54) **RESIN-COATED SUPERCONDUCTING WIRE, SUPERCONDUCTING COIL, AND SHIELD COIL**

(57)    The resin coated superconducting wire includes a matrix resin including a synthetic resin material, and a superconducting wire in the matrix resin, in which, in a transverse cross section of the resin coated superconducting wire, a cross section area of the matrix resin is equal to or larger than the cross section area of the superconducting wire.

FIG. 1

**Description**

TECHNICAL FIELD

The present disclosure relates to a resin coated superconducting wire, a superconducting coil, and a shield coil.

BACKGROUND ART

In the conventional art, a superconducting material is used as a shield coil in applications, such as nuclear magnetic resonance (NMR) systems and systems for magnetic resonance imaging (MRI) inspection. In such applications, the shield coil is used to shield the magnetic field applied from outside to inside so that proper analysis results are obtained, and is used to shield the magnetic field applied from inside to outside so that the human body and the electronic equipment are protected from the effect of the magnetic field.

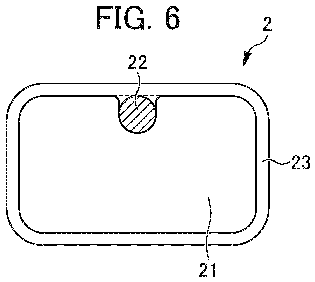

Referring to FIG. 6, such a superconducting material is, for example, a resin coated superconducting wire 2 including a superconducting wire 22 such as a NbTi wire, a copper stabilizer 21 called a copper channel coating the superconducting wire 22, and a braided resin 23 such as polyester around the copper stabilizer 21. In such a resin coated superconducting wire 2, by coating the superconducting wire 22 with the copper stabilizer 21, the heat generated from the superconducting wire 22 is released to the outside to suppress an increase in temperature, for example, with immersing the resin coated superconducting wire 2 into a liquid helium.

Moreover, in order to increase a heat generating efficiency of a superconducting material, Patent Document 1 discloses a superconducting wire which includes multiple superconducting wires, a copper stabilizer in which the superconducting wires are embedded, a resin coating the copper stabilizer, and an additional copper stabilizer coating the resin.

Patent Document 1: Japanese Unexamined Patent Application (Translation of PCT Application), Publication No. 2017-533579

DISCLOSURE OF THE INVENTION

Problems to be Solved by the Invention

Unfortunately, the conventional superconducting materials mentioned above, which include high-purity metal such as copper stabilizer around the superconducting wire, are relatively expensive and heavy and have low handleability because they tend to have a bending habit.

The present disclosure has been provided in view of the circumstances mentioned above, and it is an object of the present disclosure to provide a resin coated superconducting wire that is lightweight, highly flexible, and inexpensive as compared to conventional ones.

Means for Solving the Problems

[1] A resin coated superconducting wire including: a matrix resin including a synthetic resin material; and a superconducting wire in the matrix resin, in which, in a transverse cross section of the resin coated superconducting wire, a cross section area of the matrix resin is equal to or larger than that of the superconducting wire.
[2] The resin coated superconducting wire according to [1], in which the superconducting wire includes one or more selected from the group consisting of a composite of metal and niobium-titanium, a composite of metal and niobium-3 tin ($Nb_3Sn$), a composite of metal and magnesium diboride, a rare earth-based superconducting material, and a bismuth-based superconducting material.
[3] The resin coated superconducting wire according to [1] or [2], in which the synthetic resin material is a thermoplastic resin.
[4] The resin coated superconducting wire according to [3], in which the thermoplastic resin has a melting point of 290°C or less.
[5] The resin coated superconducting wire according to [3] or [4], in which the thermoplastic resin has a melting point of 210°C or less.
[6] The resin coated superconducting wire according to any one of [1] to [5], in which the synthetic resin material is a polyamide or a polyolefin.
[7] The resin coated superconducting wire according to [6], in which the polyamide is nylon.
[8] The resin coated superconducting wire according to any one of [1] to [7], in which the synthetic resin material is nylon 11, nylon 12, or polyethylene.

[9] The resin coated superconducting wire according to any one of [1] to [5], in which the synthetic resin material is an amorphous resin having a glass transition point of 250°C or less.

[10] The resin coated superconducting wire according to any one of [1] to [9], in which the resin coated superconducting wire is a multilayer coated wire, and the matrix resin includes two or more matrix resin layers including an inner matrix resin layer covering an outer circumference of the superconducting wire and at least one outer matrix resin layer covering an outer circumference of the inner matrix resin layer.

[11] The resin coated superconducting wire according to [10], in which the inner matrix resin layer includes an olefin-based resin having at least one functional group selected from the group consisting of an epoxy group, an oxazolyl group, an amino group, and a maleic anhydride residue, or includes a copolymer of the olefin-based resin.

[12] The resin coated superconducting wire according to [10], in which the inner matrix resin layer includes an olefin-based copolymer containing a carboxylic acid metal salt.

[13] The resin coated superconducting wire according to any one of [1] to [12], in which the superconducting wire is a single wire.

[14] The resin coated superconducting wire according to any one of [1] to [12], in which the superconducting wire is a stranded wire.

[15] The resin coated superconducting wire according to any one of [1] to [14], in which a transverse section of the resin coated superconducting wire has a rectangular shape.

[16] The resin coated superconducting wire according to any one of [1] to [14], in which a transverse section of the resin coated superconducting wire has a circular shape.

[17] The resin coated superconducting wire according to any one of [1] to [16], in which the resin coated superconducting wire has a dimensional accuracy of $\pm 0.10$ mm or less in width and a dimensional accuracy of $\pm 0.10$ mm or less in thickness.

[18] The resin coated superconducting wire according to any one of [1] to [17], in which the resin coated superconducting wire has a dimensional accuracy of $\pm 0.05$ mm or less in width and a dimensional accuracy of $\pm 0.05$ mm or less in thickness.

[19] A superconducting coil including the resin coated superconducting wire according to any one of [1] to [18].

[20] A shield coil including the resin coated superconducting wire according to any one of [1] to [18].

Effects of the Invention

The present disclosure makes it possible to provide a resin coated superconducting wire that is lightweight, highly flexible, and inexpensive as compared to conventional ones.

BRIEF DESCRIPTION OF THE DRAWINGS

FIG. 1 is a transverse cross sectional view of a resin coated superconducting wire (rectangular) according to an embodiment of the present disclosure.

FIG. 2 is a transverse cross sectional view of a resin coated superconducting wire (circular) according to an embodiment of the present disclosure.

FIG. 3 is a transverse cross sectional view of a resin coated superconducting wire (rectangular) according to an embodiment of the present disclosure.

FIG. 4 is a transverse cross sectional view of a resin coated superconducting wire (circular) according to an embodiment of the present disclosure.

FIGS. 5A to 5F are transverse cross sectional views showing different modifications of a resin coated superconducting wire (rectangular).

FIG. 6 is a transverse cross sectional view of a conventional resin coated superconducting wire.

PREFERRED MODE FOR CARRYING OUT THE INVENTION

Hereinafter, preferred embodiments of the present disclosure will be described in detail, which are not intended to limit the present disclosure.

The present inventors have completed the present disclosure based on findings that designing a resin coated superconducting wire including a matrix resin including a synthetic resin material, and a superconducting wire in the matrix resin, in which, in a transverse cross section of the resin coated superconducting wire, a cross section area of the matrix resin is equal to or larger than that of the superconducting wire makes it possible to provide a resin coated superconducting wire that is lightweight, highly flexible, and inexpensive as compared to a conventional resin coated superconducting wire.

1. Resin coated Superconducting Wire

The resin coated superconducting wire according to the present disclosure includes a matrix resin including a synthetic resin material, and a superconducting wire in the matrix resin. In the resin coated superconducting wire, when seen a transverse cross section of the resin coated superconducting wire, a cross section area of the matrix resin is equal to or larger than the cross section area of the superconducting wire.

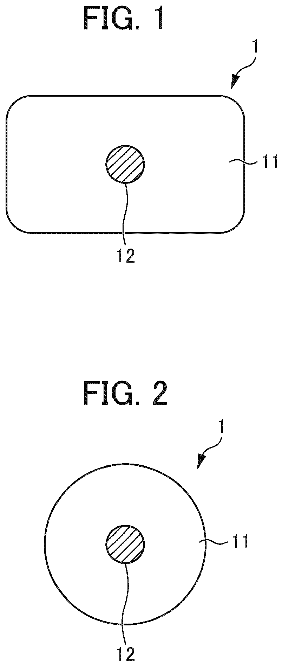

FIG. 1 is a transverse cross sectional view of a resin coated superconducting wire according to an embodiment of the present disclosure, and FIG. 2 is a transverse cross sectional view of a resin coated superconducting wire according to another embodiment of the present disclosure. As shown in FIGS. 1 to 2, the resin coated superconducting wire 1 includes a matrix resin 11 including a synthetic resin material, and a superconducting wire 12 in the matrix resin 11. According to the embodiment, in the transverse cross section of the resin coated superconducting wire 1, the cross section area of the matrix resin 11 is equal to or larger than the cross section area of the superconducting wire 12. The resin coated superconducting wire 1 shown in FIG. 1 has a rectangular transverse cross section, while the resin coated superconducting wire 1 shown in FIG. 2 has a circular transverse cross section. The resin coated superconducting wires 1 shown in FIGS. 1 to 2 are each a monolayer coated wire in which the matrix resin 11 includes a single matrix resin layer covering the outer circumference of the superconducting wire 12.

In shield coil applications, a relatively small current is allowed to flow through the superconducting wire 12 of the resin coated superconducting wire 1. In such applications, therefore, the superconducting wire 12 is less likely to be quenched. Even in case of quench, the superconducting wire 12 does not need to be combined with a large amount of copper stabilizer since the current in the superconducting wire 12 is small. On the other hand, to provide a shield coil with reliable magnetic field shielding performance, the resin coated superconducting wire 1 should be coiled such that adjacent portions of the coiled superconducting wire 12 are apart from each other at a constant distance. Therefore, the superconducting wire 12 is provided to extend (preferably embedded) in the matrix resin 11 having the transverse cross section area equal to or larger than the transverse cross section area of the superconducting wire 12. This feature allows the matrix resin 11 to serve as what is called a spacer in the resin coated superconducting wire, so that the superconducting wire 12 can be coiled with its adjacent portions kept apart from each other at a constant distance.

[Matrix Resin]

The matrix resin 11 includes a synthetic resin material. The matrix resin 11 provides reliable insulation between portions of the superconducting wire 12 and serves as what is called a spacer as mentioned above so that adjacent portions of the superconducting wire 12 can be kept apart from each other at a constant distance. It should be noted that the matrix resin is solid, which is intended to exclude fiber knitting.

The matrix resin 11 is preferably a thermoplastic resin which can be subjected to extrusion molding. The extrusion molding is an effective method for forming a thick coating such that the cross section area of the matrix resin 11 is equal to or larger than that of the superconducting wire 12 in the transverse cross section of the resin coated superconducting wire 1. The matrix resin 11 is more preferably a polyamide or a polyolefin. The polyamide is preferably nylon. The thermoplastic resin is preferably, for example, polyethylene, polypropylene, polystyrene, nylon 11, nylon 12, nylon 6, nylon 66, nylon 610, nylon MXD6 (a polycondensate of m-xylylenediamine and adipic acid), polyethylene terephthalate, polybutylene terephthalate, polyethylene naphthalate, polyphenylene sulfide, tetrafluoroethylene-hexafluoropropylene copolymer resin (FEP), tetrafluoroethylene-ethylene copolymer resin (ETFE), polycarbonate, polyphenylene ether, polyetherimide, or polyether sulfone. These resins may be used alone, or a mixture of two or more of these resins may be used.

The synthetic resin material included in the matrix resin 11 is not only that the matrix resin 11 consists of a synthetic resin material but also that the matrix resin 11 is a resin composition based on a synthetic resin material. Such a resin composition may contain various additives for use in common resin compositions, such as various fillers, antioxidants, and other additives for improving mechanical or chemical durability. For example, the matrix resin 11 may contain a filler so that the matrix resin 11 has a lower heat shrinkage percentage close to the heat shrinkage percentage of the superconducting wire 12 and thus the resin coated superconducting wire 1 has increased heat cycle resistance.

When the matrix resin 11 is a crystalline resin, the matrix resin 11 preferably has a melting point of, for example, 290°C or less, more preferably 280°C or less, even more preferably 270°C or less. When the matrix resin 11 is produced by thermoforming a raw material, the raw material with a lower melting point can be molded at a lower temperature, and thus the superconducting wire 12 can be prevented from suffering from performance degradation due to heating during the molding.

The crystalline resin, which may constitute the matrix resin 11, is preferably, for example, polyethylene, polypropylene, nylon 11, nylon 12, nylon 6, nylon 66, nylon 610, nylon MXD6, polyethylene terephthalate, polybutylene terephthalate, polyethylene naphthalate, polyphenylene sulfide, tetrafluoroethylene-hexafluoropropylene copolymer resin (FEP), or tetrafluoroethylene-ethylene copolymer resin (ETFE) .

For the purpose of further preventing the heating-induced degradation of the performance of the superconducting wire 12 during the molding, the matrix resin 11 preferably has a melting point of 210°C or less, more preferably 200°C or less, even more preferably 190°C or less. Among the crystalline resins for forming the matrix resin 11, polyethylene, polypropylene, nylon 11, and nylon 12 are preferred.

The matrix resin 11 is preferably nylon or a polyolefin. In particular, the matrix resin 11 is more preferably nylon 11, nylon 12, nylon 6, nylon 66, nylon 610, nylon MXD6, polyethylene, or polypropylene, and even more preferably nylon 11, nylon 12, polyethylene, or polypropylene since they have particularly low melting points, low heat shrinkage percentages, excellent water absorption resistance (low water absorption rates), excellent flexibility, and excellent mechanical properties.

When the matrix resin 11 is an amorphous resin, the synthetic resin material of the matrix resin 11 preferably has a glass transition point of, for example, 250°C or less, more preferably 240°C or less, even more preferably 230°C or less. For example, when the matrix resin 11 is produced by thermoforming a raw material, the lower glass transition point of the raw material allows the resin coating and molding process to be performed at a lower temperature, so that changes in the performance of the superconducting wire 12 due to heating during the thermoforming can be prevented.

The amorphous resin, which may constitute the matrix resin 11, is preferably, for example, polycarbonate, polyphenylene ether, polyetherimide, or polyether sulfone.

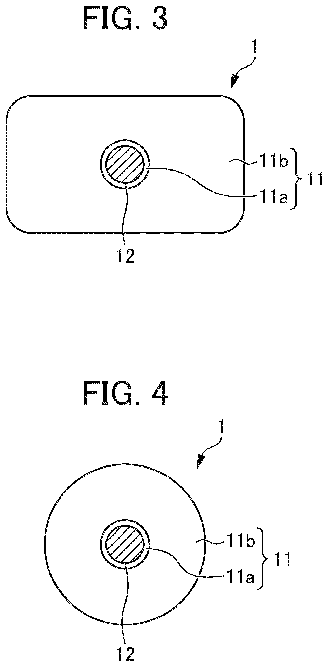

FIG. 3 is a transverse cross sectional view of another resin coated superconducting wire (rectangular), and FIG. 4 is a transverse cross sectional view of a further resin coated superconducting wire (circular). The resin coated superconducting wires 1 shown in FIGS. 3 and 4 are each a multilayer coated wire including a superconducting wire 12, and a matrix resin 11 including multiple matrix resin layers and covering the outer circumference of the superconducting wire 12. Specifically, the matrix resin 11 shown in FIGS. 3 and 4 differs from the matrix resin 11 shown in FIGS. 1 and 2 in that the matrix resin 11 shown in FIGS. 3 and 4 includes an annular inner matrix resin layer 11a covering the outer circumference of the superconducting wire 12, and at least one outer matrix resin layer 11b covering the outer circumference of the inner matrix resin layer 11a. FIGS. 3 to 4 show that the matrix resin 11 has a two-layer structure composed of a single inner matrix resin layer 11a and a single outer matrix resin layer 11b.

As shown in FIGS. 3 and 4, the resin coated superconducting wire 1 is preferably a multilayer coated wire having two or more matrix resin layers, such as the inner matrix resin layer 11a and the outer matrix resin layer 11b, and is more preferably a multilayer coated wire having two or more and four or less matrix resin layers. When the resin coated superconducting wire 1 is produced in the form of a multilayer coated wire, the resin may be used in a smaller amount per single extrusion coating process, so that the resulting extrusion coated wire is expected to have a higher dimensional accuracy. Moreover, different resins may be used to form the respective matrix resin layers, so that the resin coated superconducting wire 1 can have higher functionality.

Specifically, when the matrix resin includes a polyolefin resin, such as polyethylene or polypropylene, which has low adhesion to the superconducting wire 12, the inner matrix resin layer 11a, which is the first layer from the conductor side, may include an olefin-based resin having at least one functional group selected from the group consisting of an epoxy group, an oxazolyl group, an amino group, and a maleic anhydride residue, or include a copolymer of the olefin-based resin (also referred to as copolymer (A)). In such a multilayer coated wire, the inner matrix resin layer 11a enhances the adhesion between the superconducting wire 12 and the outer polyolefin resin 11b. Alternatively, the inner matrix resin layer 11a may include an olefin-based copolymer containing a carboxylic acid metal salt (also referred to as olefin-based copolymer (B)). In such a multilayer coated wire, the inner matrix resin layer 11a is also expected to enhance the adhesion as mentioned above.

The olefin component used to form the copolymer (A) is preferably ethylene, propylene, butene-1, pentene-1, 4-methylpentene-1, isobutylene, hexene-1, decene-1, octene-1, 1,4-hexadiene, or dicyclopentadiene, and more preferably ethylene, propylene, or butene-1. These components may be used alone, or two or more of these components may be used.

The copolymer component used other than the olefin to form the copolymer (A) may be at least one component of an acrylic component and a vinyl component.

The acrylic component is preferably acrylic acid, methyl acrylate, ethyl acrylate, n-propyl acrylate, isopropyl acrylate, n-butyl acrylate, tert-butyl acrylate, isobutyl acrylate, methyl methacrylate, ethyl methacrylate, or butyl methacrylate. The vinyl component is preferably vinyl acetate, vinyl propionate, vinyl butyrate, vinyl chloride, vinyl alcohol, or styrene. Among them, methyl acrylate and methyl methacrylate are more preferred. These components may be used alone, or two or more of these components may be used. Typical preferred examples of the copolymer (A) include maleic anhydride-grafted polyethylene or polypropylene, ethylene-glycidyl methacrylate copolymers, and commercially available resins such as Admer (trade name, manufactured by Mitsui Chemicals, Inc.), Bond Fast (trade name, manufactured by Sumitomo Chemical Co., Ltd.), and Lotader (trade name, manufactured by Atofina).

Preferred examples of the carboxylic acid used to form the olefin-based copolymer (B) include unsaturated monocarboxylic acids such as acrylic acid, methacrylic acid, and crotonic acid, and unsaturated dicarboxylic acids such as maleic acid, fumaric acid, and phthalic acid. Examples of the metal salt include Zn salts, Na salts, K salts, and Mg salts. The olefin-based copolymer (B) is preferably a resin generally called an ionomer, such as Himilan (trade mane, manufactured by Mitsui Polychemicals), in which some parts of the carboxylic acid in the ethylene-methacrylic acid copolymer is a metal salt.

The matrix resin 11 preferably has a heat shrinkage percentage of 5% or less, more preferably 2% or less, even more preferably 1% or less as calculated using the method shown below. This feature makes the matrix resin 11 less vulnerable to damage or degradation when the matrix resin 11 is immersed in a cooling medium such as liquid helium.

(Method of Calculating Heat Shrinkage Percentage)

The resin coated superconducting wire 1 is cut along the longitudinal direction of the resin coated superconducting wire 1 into 0.2 g pieces, each of which is immersed in 500 mL liquid helium for several minutes and then measured for size. The heat shrinkage percentage of the resin coated superconducting wire 1 is calculated from the formula (1) below.

```
Heat shrinkage percentage (%) = {(the size of the resin coated
superconducting wire before the immersion - the size of the
resin coated superconducting wire after the immersion)/the
size of the resin coated superconducting wire before the
immersion} × 100 ··Formula (1)
```

The matrix resin 11 more preferably has a water absorption rate of 1.0% or less, even more preferably 0.7% or less as calculated using the method shown below. The lower the water absorption rate, the less likely the surface of the matrix resin 11 is to expand. This feature makes the matrix resin 11 less vulnerable to a reduction in mechanical strength, which is caused by damage, degradation, deterioration, or cracking that occurs when the matrix resin 11 absorbs water. The calculation method shown below is one of the methods for determining the water absorption rate of plastics according to JIS K 7209.

(Method of Calculating Water Absorption Rate)

The resin coated superconducting wire 1 is cut along the longitudinal direction of the resin coated superconducting wire 1 into 1.0 g pieces, each of which is immersed in 500 mL water at 23°C for 24 hours, then wiped to remove water from the surface, and then measured for weight. The water absorption rate of the resin coated superconducting wire 1 is calculated from the formula (2) below.

```
Water absorption rate (%) = {(the weight of the resin coated
superconducting wire before the immersion - the weight of the
resin coated superconducting wire after the immersion)/the
weight of the resin coated superconducting wire before the
immersion} × 100 ··Formula (2)
```

[Superconducting Wire]

The superconducting wire 12 is a wire in the matrix resin 11 described above and has superconducting property.

As a size of the transverse cross section of the superconducting wire 12, when the transverse cross section is a circular shape, the size is preferably 0.05 to 2.00 mmφ, more preferably 0.07 to 1.50 mmφ, even more preferably 0.1 to 1.0 mmφ. When the transverse cross section of the superconducting wire 12 is a rectangular shape, the long side of the rectangular shape is preferably 0.8 mm to 2.5 mm, more preferably 1.5 mm to 2.0 mm, and the short side of the rectangular shape is preferably 0.5 mm to 1.5 mm, more preferably 0.9 mm to 1.2 mm.

The superconducting wire 12 preferably includes, for example, at least one superconducting material selected from the group consisting of a composite of metal and niobium-titanium, a composite of metal and niobium-3 tin ($Nb_3Sn$), a composite of metal and magnesium diboride, a rare earth-based superconducting material, and a bismuth-based superconducting material. In this regard, the composite of metal and niobium-titanium, the composite of metal and niobium-3 tin, or the composite of metal and magnesium diboride refer to a composite in which the metal such as copper or iron covers the surrounding of the niobium-titanium, the niobium-3 tin, or the magnesium diboride.

Examples of the rare earth-based material include $YBa_2Cu_3O_{7-\delta}$ and $GdBa_2Cu_3O_{7-\delta}$. Examples of the bismuth-based material include $Bi_2Sr_2Ca_2Cu_3O_{10+\delta}$ and $Bi_2Sr_2CaCu_2O_{8+\delta}$.

The superconducting wire 12 may be a single wire or a stranded wire including multiple strands twisted together.

[Relationship between Matrix Resin and Superconducting Wire]

As described above, in the resin coated superconducting wire 1, when seen the transverse cross section of the resin coated superconducting wire 1, the cross section area of the matrix resin 11 is equal to or larger than the cross section area of the superconducting wire 12.

In the transverse cross section of the resin coated superconducting wire 1, the ratio of the cross section area of the matrix resin 11 to the cross section area of the superconducting wire 12 (the cross section area of the matrix resin 11/the cross section area of the superconducting wire 12) is preferably 2 or more, more preferably 5 or more, even more preferably 10 or more, further more preferably 20 or more, most preferably 40 or more. The ratio of the cross section area preferably has an upper limit of 1000 from practical points of view such as coil material suitability and handleability for coiling operation.

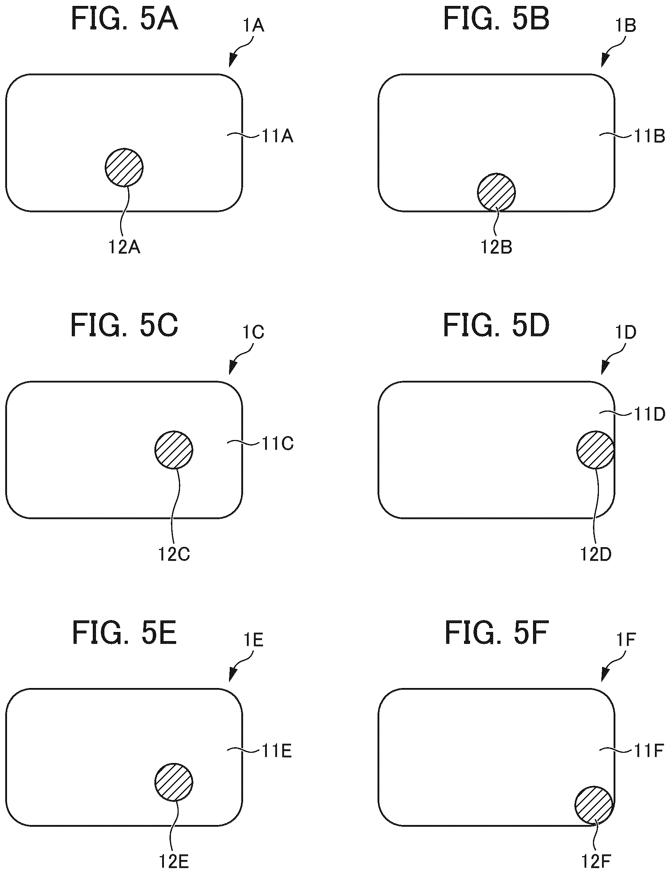

FIGS. 1 and 2 show a case in which the superconducting wire 12 is located at the center (gravity center) of the matrix resin 11 in the transverse cross section of the resin coated superconducting wire 1. However, the superconducting wire 12 may be located at any position in the matrix resin 11 as long as the superconducting wire 12 remains not exposed from the surface of the resin coated superconducting wire 1 (as long as at least a small amount of the resin component of the matrix resin 11 is present over the surface of the resin coated superconducting wire 1). For example, FIGS. 5A to 5F show modified examples illustrating the transverse cross sections of the resin coated superconducting wires 1A to 1F, which have a rectangular cross section and respectively include the superconducting wires 12A to 12F located at different positions in the transverse cross sections of the matrix resins 11A to 11F.

The resin coated superconducting wire has one superconducting wire 12 in the form of a single wire or a stranded wire, which is located in one matrix resin 11.

The resin coated superconducting wire may have any transverse cross section shape such as a circular shape including an elliptic shape, a triangular shape, a square shape, or a rectangular shape. For ease of coiling, the resin coated superconducting wire preferably has a rectangular transverse cross section shape. When the transverse cross section of the resin coated superconducting wire is a rectangular shape, the rectangular transverse cross section shape of the resin coated superconducting wire may have a round corner or corners with an R value of 1 mm or less.

When the resin coated superconducting wire has a rectangular shape, the transverse cross section of the resin coated superconducting wire preferably has a long side of, for example, 0.5 mm to 10 mm, more preferably 1 mm to 7 mm. The transverse cross section of the resin coated superconducting wire preferably has a short side of, for example, 0.1 mm to 5 mm, more preferably 0.5 mm to 3 mm.

The resin coated superconducting wire preferably has a dimensional accuracy of $\pm 0.10$ mm or less in width and a dimensional accuracy of $\pm 0.10$ mm or less in thickness, and more preferably has a dimensional accuracy of $\pm 0.05$ mm or less in width and a dimensional accuracy of $\pm 0.05$ mm or less in thickness. As used herein, the dimensional accuracy refers to the range of difference between the maximum and minimum of a dimension of a piece of the resin coated superconducting wire. The resin coated superconducting wire with such a dimensional accuracy as mentioned above provides higher electromagnetic shielding performance. Such a dimensional accuracy may be achieved by a method of cutting the outer surface of a product resulting from resin extrusion process. Alternatively, such a dimensional accuracy may be achieved by a method of coating the surface of the matrix resin with, for example, a UV-curable resin material.

The resin coated superconducting wire described above may be used to form a superconducting coil, specifically, a shield coil for use in NMR systems and MRI inspection systems.

As a voltage applied to the above resin coated superconducting wire, the voltage, but is not limited, is preferably 0 to 50 V, more preferably 0 to 20 V, even more preferably 0 to 10 V.

As compared to conventional superconducting wires including copper stabilizer, the resin coated superconducting wire is lightweight, inexpensive, improved in flexibility, and less likely to have a bending habit, and is easy to coil because it has high flexibility or bendability and good handleability.

2. Method for Producing Resin Coated Superconducting Wire

The resin coated superconducting wire according to the embodiment described above may be produced, for example, using an extrusion process similar to a common process for forming an extruded resin material, which inserts a superconducting wire into a synthetic resin raw material for forming a matrix resin and then extrudes the raw material. The heating temperature, the extrusion rate, and other conditions may be appropriately adjusted depending on the kind of the synthetic resin raw material and the size and shape of the product to be formed.

A conventional technique includes two steps including covering a superconducting strand with a resin and then embedding the strand in a copper channel. On the other hand, the resin coated superconducting wire according to the embodiment can be completed using a single step instead of the conventional two steps because the matrix resin can be shaped into the same form as that of the copper channel.

EXAMPLES

Next, examples will be described to make clearer the advantageous effects of the present disclosure. It will be understood that the examples are not intended to limit the present disclosure.

(Examples 1 to 40)

The synthetic resin raw materials used were nylon 11 (BESN Noir TN manufactured by Arkema), nylon 12 (UBESTA 3030LUX manufactured by Ube Industries, Ltd.), nylon 6 (UBESTA 1024JI manufactured by Ube Industries, Ltd.), nylon 66 (Leona® 1300S manufactured by Asahi Kasei Corporation), and high-density polyethylene (Suntech®-HD B891 manufactured by Asahi Kasei Corporation). A superconducting wire with 0.3 mmφ of a composite of copper and niobium-titanium was inserted into the synthetic resin raw material and then subjected to an extrusion process at a temperature equal to or more than a temperature that is obtained by adding the melting point of each resin raw material and 20°C and equal to or less than a temperature that is obtained by adding the melting point of each resin raw material and 80°C using a die for forming a rectangular product (Examples 1 to 20) or a circular product (Examples 21 to 40) having the dimensions shown in Table 2 or 3 below. As shown in FIGS. 1 and 2, the superconducting wire was placed at the center of the synthetic resin material. A resin coated superconducting wire having a rectangular transverse cross section was produced in each of Examples 1 to 20. A resin coated superconducting wire having a circular transverse cross section was produced in each of Examples 21 to 40.

(Example 41)

The synthetic resin raw material used was high-density polyethylene (Suntech®-HD B891 manufactured by Asahi Kasei Corporation). A superconducting wire with 0.3 mmφ of a composite of copper and niobium-titanium coated with 20 μm-thick modified low-density polyethylene having a graft-copolymerized maleic anhydride moiety (Admer NB508 manufactured by Mitsui Chemicals, Inc.) was inserted into the synthetic resin raw material and then subjected to an extrusion process at a temperature equal to or more than a temperature that is obtained by adding the melting point of each resin raw material and 20°C and equal to or less than a temperature that is obtained by adding the melting point of each resin raw material and 80°C using a die for forming a rectangular product having the dimensions shown in Table 4 below. As shown in FIG. 3, the superconducting wire was placed at the center of the synthetic resin material.

(Example 42)

A resin coated superconducting wire was obtained as in Example 41 except that a superconducting wire with 0.3 mmφ of a composite of copper and niobium-titanium coated with 20 μm-thick ethylene-methacrylic acid copolymer in which some parts of the carboxylic acid was a metal salt (Himilan 1855 manufactured by Mitsui Polychemicals) was used instead.

(Example 43)

The synthetic resin raw material used was high-density polyethylene (Suntech®-HD B891 manufactured by Asahi Kasei Corporation). A superconducting wire with 0.3 mmφ of a composite of copper and niobium-titanium coated with 20 μm-thick modified low-density polyethylene having a graft-copolymerized maleic anhydride moiety (Admer NB508 manufactured by Mitsui Chemicals, Inc.) was inserted into the synthetic resin raw material and then subjected to an extrusion process at a temperature equal to or more than a temperature that is obtained by adding the melting point of each resin raw material and 20°C and equal to or less than a temperature that is obtained by adding the melting point of each resin raw material and 80°C using a die for forming a circular product having the dimensions shown in Table 5 below. As shown in FIG. 4, the superconducting wire was placed at the center of the synthetic resin material.

The cross section area of the matrix resin was calculated by determining, in the transverse cross section of the resin coated superconducting wire, the cross section area of the resin coated superconducting wire from the external dimensions of the resin coated superconducting wire and then subtracting the cross section area of the superconducting wire from the determined cross section area. The calculated cross section area of the matrix resin was used to calculate the weight and cost of the resin per 1000 m length of the resin coated superconducting wire and the cost relative to those of copper. The results are shown in Tables 2 to 5 below. In Tables 2 to 5, the parenthesized values indicate the values calculated in terms of copper.

Table 1 shows the melting point, the glass transition point, the heat shrinkage percentage, and the water absorption rate of each of the synthetic resin materials used in Examples 1 to 43. The heat shrinkage percentage and the water absorption rate were determined by the methods described above.

[Table 1]

| Resin | Melting point [°C] | Glass transition point [°C] | Heat shrinkage percentage [%] | Water absorption rate [%] |
|---|---|---|---|---|
| Nylon 11 | 186 | 46 | <5 | 0.4 |
| Nylon 12 | 180 | 37 | <5 | 0.4 |
| Nylon 6 | 221 | 45 | <5 | 1.7 |
| Nylon 66 | 258 | 47 | <5 | 1.7 |
| Polyethylene | 141 | -45 | <5 | 0.04 |
| Modified low-density polyethylene | 120 | <0 | <5 | <0.5 |
| Ethylene-methacrylic acid copolymer | 86 | <0 | <5 | <0.5 |

[Table 2]

| | Resin | Resin coated superconducting wire | | | | | Cross section area ratio (matrix resin/ super conducting wire) | Resin weight per 1000 m [kg] | Material cost ratio per unit length (cost ratio of resin/copper) |
| | | External dimensions [mm] | | | Cross section area of matrix resin [mm$^2$] | Cross section area of superconducting wire [mm$^2$] | | | |
| | | Width | Thickness | Curvature radius R of corner | | | | | |
|---|---|---|---|---|---|---|---|---|---|
| Example 1 | Nylon 11 | 2.5 | 1.5 | 0.3 | 3.6 | 0.071 | 51 | 4 (33) | About 1/3 |
| Example 2 | Nylon 11 | 3.5 | 2.1 | 0.3 | 7.1 | 0.071 | 100 | 8 (64) | About 1/3 |
| Example 3 | Nylon 11 | 5 | 3 | 0.3 | 15 | 0.071 | 210 | 16 (133) | About 1/3 |
| Example 4 | Nylon 11 | 10.9 | 6.5 | 0.3 | 71 | 0.071 | 1000 | 73 (630) | About 1/3 |
| Example 5 | Nylon 12 | 2.5 | 1.5 | 0.3 | 3.6 | 0.071 | 51 | 4 (33) | About 1/3 |
| Example 6 | Nylon 12 | 3.5 | 2.1 | 0.3 | 7.1 | 0.071 | 100 | 8 (64) | About 1/3 |
| Example 7 | Nylon 12 | 5 | 3 | 0.3 | 15 | 0.071 | 210 | 16 (133) | About 1/3 |
| Example 8 | Nylon 12 | 10.9 | 6.5 | 0.3 | 71 | 0.071 | 1000 | 73 (630) | About 1/3 |
| Example 9 | Nylon 6 | 2.5 | 1.5 | 0.3 | 3.6 | 0.071 | 51 | 5 (33) | About 1/8 |
| Example 10 | Nylon 6 | 3.5 | 2.1 | 0.3 | 7.1 | 0.071 | 100 | 9 (64) | About 1/8 |
| Example 11 | Nylon 6 | 5 | 3 | 0.3 | 15 | 0.071 | 210 | 17 (133) | About 1/8 |
| Example 12 | Nylon 6 | 10.9 | 6.5 | 0.3 | 71 | 0.071 | 1000 | 80 (630) | About 1/8 |
| Example 13 | Nylon 66 | 2.5 | 1.5 | 0.3 | 3.6 | 0.071 | 51 | 5 (33) | About 1/6 |

EP 3 979 264 A1

(continued)

| | Resin | Resin coated superconducting wire | | | Cross section area of matrix resin [mm$^2$] | Cross section area of superconducting wire [mm$^2$] | Cross section area ratio (matrix resin/ super conducting wire) | Resin weight per 1000 m [kg] | Material cost ratio per unit length (cost ratio of resin/copper) |
|---|---|---|---|---|---|---|---|---|---|
| | | External dimensions [mm] | | | | | | | |
| | | Width | Thickness | Curvature radius R of corner | | | | | |
| Example 14 | Nylon 66 | 3.5 | 2.1 | 0.3 | 7.1 | 0.071 | 100 | 9 (64) | About 1/6 |
| Example 15 | Nylon 66 | 5 | 3 | 0.3 | 15 | 0.071 | 210 | 17 (133) | About 1/6 |
| Example 16 | Nylon 66 | 10.9 | 6.5 | 0.3 | 71 | 0.071 | 1000 | 81 (630) | About 1/6 |
| Example 17 | Polyethylene | 2.5 | 1.5 | 0.3 | 3.6 | 0.071 | 51 | 4 (33) | About 1/39 |
| Example 18 | Polyethylene | 3.5 | 2.1 | 0.3 | 7.1 | 0.071 | 100 | 7 (64) | About 1/39 |
| Example 19 | Polyethylene | 5 | 3 | 0.3 | 15 | 0.071 | 210 | 15 (133) | About 1/39 |
| Example 20 | Polyethylene | 10.9 | 6.5 | 0.3 | 71 | 0.071 | 1000 | 68 (630) | About 1/39 |

[Table 3]

| | Resin | Resin coated superconducting wire | | | Cross section area ratio (matrix resin/ super conducting wire) | Resin weight per 1000 m [kg] | Material cost ratio per unit length (cost ratio of resin/ copper) |
|---|---|---|---|---|---|---|---|
| | | External diameter [mm] | Cross section area of matrix resin [mm$^2$] | Cross section area of superconducting wire [mm$^2$] | | | |
| Example 21 | Nylon 11 | 2.16 | 3.6 | 0.071 | 51 | 4 (33) | About 1/3 |
| Example 22 | Nylon 11 | 3.04 | 7.1 | 0.071 | 100 | 8 (64) | About 1/3 |
| Example 23 | Nylon 11 | 4.36 | 15 | 0.071 | 210 | 16 (133) | About 1/3 |
| Example 24 | Nylon 11 | 9.49 | 71 | 0.071 | 1000 | 73 (630) | About 1/3 |
| Example 25 | Nylon 12 | 2.16 | 3.6 | 0.071 | 51 | 4 (33) | About 1/3 |
| Example 26 | Nylon 12 | 3.04 | 7.1 | 0.071 | 100 | 8 (64) | About 1/3 |
| Example 27 | Nylon 12 | 4.36 | 15 | 0.071 | 210 | 16 (133) | About 1/3 |
| Example 28 | Nylon 12 | 9.49 | 71 | 0.071 | 1000 | 73 (630) | About 1/3 |
| Example 29 | Nylon 6 | 2.16 | 3.6 | 0.071 | 51 | 5 (33) | About 1/8 |
| Example 30 | Nylon 6 | 3.04 | 7.1 | 0.071 | 100 | 9 (64) | About 1/8 |
| Example 31 | Nylon 6 | 4.36 | 15 | 0.071 | 210 | 17 (133) | About 1/8 |
| Example 32 | Nylon 6 | 9.49 | 71 | 0.071 | 1000 | 80 (630) | About 1/8 |
| Example 33 | Nylon 66 | 2.16 | 3.6 | 0.071 | 51 | 5 (33) | About 1/6 |
| Example 34 | Nylon 66 | 3.04 | 7.1 | 0.071 | 100 | 9 (64) | About 1/6 |
| Example 35 | Nylon 66 | 4.36 | 15 | 0.071 | 210 | 17 (133) | About 1/6 |
| Example 36 | Nylon 66 | 9.49 | 71 | 0.071 | 1000 | 81 (630) | About 1/6 |
| Example 37 | Polyethylene | 2.16 | 3.6 | 0.071 | 51 | 4 (33) | About 1/39 |
| Example 38 | Polyethylene | 3.04 | 7.1 | 0.071 | 100 | 7 (64) | About 1/39 |
| Example 39 | Polyethylene | 4.36 | 15 | 0.071 | 210 | 15 (133) | About 1/39 |

(continued)

| | Resin | Resin coated superconducting wire | | | Cross section area ratio (matrix resin/ super conducting wire) | Resin weight per 1000 m [kg] | Material cost ratio per unit length (cost ratio of resin/ copper) |
|---|---|---|---|---|---|---|---|
| | | External diameter [mm] | Cross section area of matrix resin [mm$^2$] | Cross section area of superconducting wire [mm$^2$] | | | |
| Example 40 | Polyethylene | 9.49 | 71 | 0.071 | 1000 | 68 (630) | About 1/39 |

EP 3 979 264 A1

[Table 4]

| | Resin | Resin coated superconducting wire | | | | | | | |
| | | External dimensions [mm] | | | Cross section area of matrix resin [mm²] | Cross section area of superconducting wire [mm²] | Cross section area ratio (matrix resin/super conducting wire) | Resin weight per 1000 m [kg] | Material cost ratio per unit length (cost ratio of resin/copper) |
| | | Width | Thickness | Curvature radius R of corner | | | | | |
| Example 41 | Modified low-density polyethylene/polyethylene | 2.5 | 1.5 | 0.3 | 3.6 | 0.071 | 51 | 4 (33) | About 1/39 |
| Example 42 | Ethylene-methacrylic acid copolymer/polyethylene | 2.5 | 1.5 | 0.3 | 3.6 | 0.071 | 51 | 4 (33) | About 1/39 |

14

[Table 5]

| | Resin | Resin coated superconducting wire | | | Cross section area ratio (matrix resin/ super conducting wire) | Resin weight per 1000m [kg] | Material cost ratio per unit length (cost ratio of resin/ copper) |
| | | External diameter [mm] | Cross section area of matrix resin [mm$^2$] | Cross section area of superconducting wire [mm$^2$] | | | |
|---|---|---|---|---|---|---|---|
| Example 43 | Modified low-density polyethylene/ polyethylene | 2.16 | 3.6 | 0.071 | 51 | 4 (33) | About 1/39 |

It has been demonstrated that the resulting resin coated superconducting wires of Examples 1 to 43 have dimensions substantially the same as that of conventional superconducting wire including a copper channel and provide magnetic shielding performance substantially the same as that of conventional superconducting wire including a copper channel.

Tables 2 to 5 also show that the resin coated superconducting wires of Examples 1 to 43 can attain a significantly reduced weight and a reduced material cost as compared to copper coated superconducting wire.

EXPLANATION OF REFERENCE NUMERALS

1, 1A, 1B, 1C, 1D, 1E, 1F, 2: Resin coated superconducting wire
11, 11A, 11B, 11C, 11D, 11E, 11F: Matrix resin
11a: Inner matrix resin layer
11b: Outer matrix resin layer
12, 12A, 12B, 12C, 12D, 12E, 12F, 22: Superconducting wire
21: Copper stabilizer

**Claims**

1.  A resin coated superconducting wire comprising:

    a matrix resin comprising a synthetic resin material; and
    a superconducting wire in the matrix resin,
    wherein, in a transverse cross section of the resin coated superconducting wire, a cross section area of the matrix resin is equal to or larger than that of the superconducting wire.

2.  The resin coated superconducting wire according to claim 1, wherein the superconducting wire comprises one or more selected from the group consisting of a composite of metal and niobium-titanium, a composite of metal and niobium-3 tin (Nb$_3$Sn), a composite of metal and magnesium diboride, a rare earth-based superconducting material, and a bismuth-based superconducting material.

3.  The resin coated superconducting wire according to claim 1 or 2, wherein the synthetic resin material is a thermoplastic resin.

4.  The resin coated superconducting wire according to claim 3, wherein the thermoplastic resin has a melting point of 290°C or less.

5.  The resin coated superconducting wire according to claim 3 or 4, wherein the thermoplastic resin has a melting point of 210°C or less.

6. The resin coated superconducting wire according to any one of claims 1 to 5, wherein the synthetic resin material is a polyamide or a polyolefin.

7. The resin coated superconducting wire according to claim 6, wherein the polyamide is nylon.

8. The resin coated superconducting wire according to any one of claims 1 to 7, wherein the synthetic resin material is nylon 11, nylon 12, or polyethylene.

9. The resin coated superconducting wire according to any one of claims 1 to 5, wherein the synthetic resin material is an amorphous resin having a glass transition point of 250°C or less.

10. The resin coated superconducting wire according to any one of claims 1 to 9, wherein the resin coated superconducting wire is a multilayer coated wire, and the matrix resin comprises two or more matrix resin layers including an inner matrix resin layer covering an outer circumference of the superconducting wire and at least one outer matrix resin layer covering an outer circumference of the inner matrix resin layer.

11. The resin coated superconducting wire according to claim 10, wherein the inner matrix resin layer comprises an olefin-based resin having at least one functional group selected from the group consisting of an epoxy group, an oxazolyl group, an amino group, and a maleic anhydride residue, or comprises a copolymer of the olefin-based resin.

12. The resin coated superconducting wire according to claim 10, wherein the inner matrix resin layer comprises an olefin-based copolymer containing a carboxylic acid metal salt.

13. The resin coated superconducting wire according to any one of claims 1 to 12, wherein the superconducting wire is a single wire.

14. The resin coated superconducting wire according to any one of claims 1 to 12, wherein the superconducting wire is a stranded wire.

15. The resin coated superconducting wire according to any one of claims 1 to 14, wherein a transverse section of the resin coated superconducting wire has a rectangular shape.

16. The resin coated superconducting wire according to any one of claims 1 to 14, wherein a transverse section of the resin coated superconducting wire has a circular shape.

17. The resin coated superconducting wire according to any one of claims 1 to 16, wherein the resin coated superconducting wire has a dimensional accuracy of $\pm0.10$ mm or less in width and a dimensional accuracy of $\pm0.10$ mm or less in thickness.

18. The resin coated superconducting wire according to any one of claims 1 to 17, wherein the resin coated superconducting wire has a dimensional accuracy of $\pm0.05$ mm or less in width and a dimensional accuracy of $\pm0.05$ mm or less in thickness.

19. A superconducting coil comprising the resin coated superconducting wire according to any one of claims 1 to 18.

20. A shield coil comprising the resin coated superconducting wire according to any one of claims 1 to 18.

# FIG. 1

# FIG. 2

# FIG. 3

# FIG. 4

EP 3 979 264 A1

FIG. 5A

FIG. 5B

FIG. 5C

FIG. 5D

FIG. 5E

FIG. 5F

19

# FIG. 6

## INTERNATIONAL SEARCH REPORT

| International application No. |
|---|
| PCT/JP2020/021496 |

A. CLASSIFICATION OF SUBJECT MATTER
Int.Cl. H01B12/02(2006.01)i, H01F6/06(2006.01)i
FI: H01B12/02, H01F6/06140

According to International Patent Classification (IPC) or to both national classification and IPC

B. FIELDS SEARCHED

Minimum documentation searched (classification system followed by classification symbols)
Int.Cl. H01B12/02, H01F6/06

Documentation searched other than minimum documentation to the extent that such documents are included in the fields searched
Published examined utility model applications of Japan    1922–1996
Published unexamined utility model applications of Japan    1971–2020
Registered utility model specifications of Japan    1996–2020
Published registered utility model applications of Japan    1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | Microfilm of the specification and drawings annexed to the request of Japanese Utility Model Application No. 114772/1975 (Laid-open No. 29071/1977) (TOKYO SHIBAURA ELECTRIC CO., LTD.) 01.03.1977 (1977-03-01), claims, page 4, line 9 to page 5, line 4, fig. 1 | 1-6, 8-10, 13-20<br>7, 11-12 |
| A | JP 2013-20727 A (NITTO DENKO CORPORATION) 31.01.2013 (2013-01-31) | 1-20 |

☐ Further documents are listed in the continuation of Box C.    ☒ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 14.07.2020 | 21.07.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| | | |
|---|---|---|
| | **INTERNATIONAL SEARCH REPORT** | International application No. |
| | Information on patent family members | PCT/JP2020/021496 |

| | | |
|---|---|---|
| JP 52-29071 U1 | 01.03.1977 | (Family: none) |
| JP 2013-20727 A | 31.01.2013 | US 2013/0008688 A1 |
| | | EP 2544194 A1 |
| | | CN 102867601 A |

Form PCT/ISA/210 (patent family annex) (January 2015)

**EP 3 979 264 A1**

**REFERENCES CITED IN THE DESCRIPTION**

**Patent documents cited in the description**

- JP 2017533579 W